# EUROPEAN PATENT APPLICATION

(11) **EP 2 756 758 A1**
(43) Date of publication of application: **23.07.2014**
(21) Application number: 14151405.9
(22) Date of filing: 16.01.2014
(51) Int. Cl.: A21C 11/16, A23L 1/00, A23L 1/164

(54) **Improved snack product and method for its manufacture**

(30) Priority: 18.01.2013 GB 201300945
(71) Applicant: Intersnack Group GmbH & Co. KG, 40468 Düsseldorf (DE)
(72) Inventor: Clow, Andrew Edward Crispian, High Wycombe, Buckinghamshire HP13 5JX (GB); Sidani, Ramzi Suham, Ashby De La Zouch, Leicestershire LE65 2QU (GB); McCartney, Clare Jennifer, Ashby De La Zouch, Leicestershire LE65 2SZ (GB); Clark, David Nigel, Belton, Leicestershire LE129TP (GB)
(74) Representative: Becker Kurig Straus

(57) **Abstract**

A fabricated snack product has a tubular body comprising a perimeter wall defining the perimeter of the tubular body, the perimeter wall having an inner surface and an outer surface, wherein both the inner surface and the outer surface have a plurality of parallel ridges and troughs whereby the perimeter wall is of corrugated configuration, and wherein the snack product has a bulk density of at least 100g per litre, the snack product having a moisture content of not more than 3% by weight. The snack product is obtainable using a process comprising extrusion and cooking. The product has attractive appearance and texture and is obtainable with reduced blistering/blowing on cooking.

## Description

The invention relates to snack food products. In particular, the invention relates to extruded snack food products and to methods and apparatus for making them.

Snack products fall into a wide variety of different types. Especially popular with consumers are bagged snacks, which may be for instance in the form of cooked fresh potato pieces (potato crisps) or fabricated savoury snacks. In this specification "fabricated snack product" means a snack product that has been made from a dough comprising one or more starchy components and water which is formed into shaped pieces that are cooked, the cooked pieces being bagged in bags containing a multiplicity of the ready-to-eat pieces having a moisture content of not exceeding 4% by weight, preferably not exceeding 3% by weight, and more preferably not exceeding 2% by weight. The fat content of fabricated snack products is usually determined mainly by how they are cooked. Typically fabricated fried snack products have a fat content of at least 10% by weight, for example in the range of from 15 to 40% by weight, especially 20 to 35% by weight. The fat content of fried fabricated snacks will generally arise primarily from absorbed frying medium. Fabricated snacks which are made using other cooking methods, such as baking or air expansion, may have lower fat contents, for example in the range of from 0 to 35% by weight, more usually from 0 to 20% or 0 to 10% by weight, and where present in such products some or all of the fat is typically applied after cooking, for example as a vehicle for flavouring.

Fabricated snack products made mainly of potato ingredients have been especially well accepted by consumers since the 1950s. Some of these products were made possible due to the development of potato ingredients made by dehydration of cooked mashed potato. The use of potato dehydrates together with different processes have allowed development of a large range of new snack textures going from hard crunchy to light melt-in-the-mouth texture which are appealing to consumers. Potato-derived ingredients commonly used in the manufacture of snack products include, for example, potato granules, potato flakes, potato flour, potato powder and potato starch. Fabricated snacks made mainly of potato ingredients can be made by forming a dough of at least principally one or more dehydrated potato ingredients and water, forming the dough into pieces, and cooking the pieces, preferably by frying. In one common method, a dough is formed into shaped pieces by extrusion and the shaped pieces are fried or baked. Formation of the dough into shapes using extrusion allows a wide variety of shapes to be obtained.

Some fabricated snack products are made using pre-formed pellets, which are then converted by a suitable cooking technique, for example by frying or by expansion in hot air, into the final expanded and cooked snack product. The pre-formed pellets are made by preparing a dough, forming pellets from the dough, partly drying the pellets to a moisture content of, say, 10 to 13 % by weight, and subsequently storing the pellets until they are required. The pellets, which may be formed in a variety of different shapes, may be shelf-stable for long periods. In general pellets are made in a first location and shipped in pellet form to the end user who will convert them to the final snack product. Snack pellets may be made from grains, potatoes or other vegetables. Some of the known pellets comprise tubes with ridged surfaces. The taste and texture of snack products made from pellets is typically different from that of snack products formed and cooked without such an intermediate semi-dry pellet stage.

Fabricated snack doughs in general undergo a degree of expansion when cooked, with a relatively uniform expansion being desirable. Frying of tubular structures made from potato dehydrates tends to lead to blistering or blowing of the structure, resulting in undesirable delamination, inconsistent appearance of the fabricated snack products and undesirable effects on product texture. A further disadvantage encountered in relation to known products is that certain products do not cook as evenly as desired. The problems of blistering and uneven cooking may be exacerbated in products in which the configuration is such that the escape of steam from the product during frying may be impeded. There is a continuing need for improved snack products and/or for snack products which can be made by more straightforward and/or economical manufacturing methods.

The invention provides a fabricated snack product having a tubular body comprising a wall defining the perimeter of the tubular body, the perimeter wall having an inner surface and an outer surface, wherein both the inner surface and the outer surface have a plurality of ridges and troughs, preferably parallel ridges and troughs, whereby the perimeter wall is corrugated, the snack product having a bulk density of at least 100g per liter, the snack product having a moisture content of not more than 3% by weight.

It is believed that a perimeter wall that is corrugated is particularly advantageous in that, on cooking, and especially in the case of frying, the structure loses its moisture evenly and/or has low susceptibility to blistering or blowing. For example, because the perimeter wall is corrugated, the product is able to cook relatively evenly compared with products having protrusions only on the outer surface, which products tend to have substantial variations in thickness. The arrangement is preferably such that the thickness of the wall is substantially uniform. Thus, it is preferred that ridges and troughs on the outer surface are aligned with ridges and troughs on the inner surface. It is also within the scope of the invention, however, for the ridges and troughs on the outer surface to be slightly offset with respect to the ridges and troughs on the inner surface, with the result that there is a small, but regular, variation in the thickness, alternating slightly thicker and slightly thinner portions. An offset, when present, will generally be not greater than 15% of the distance between adjacent ridges.

The perimeter wall includes first and second end surfaces. The end surfaces circumferentially surround the void interior at the respective tube end. The end surfaces may advantageously be considered to be essentially annular, especially essentially circular annular, although it is in each case preferred that the end surface has a wavy configuration resulting from the ridges and troughs in the inner and outer surfaces of the perimeter wall. The precise configuration of the end surfaces will depend on the configuration of the ridges and troughs on the inner and outer surfaces and may additionally vary according to the angling of the end surface, for example, angle of cutting of the end surface, relative to the perimeter wall.

The snack product may be any fabricated snack product but it is preferred that it comprises potato material and/or cereal material, especially potato material. The potato material advantageously comprises potato dehydrates. Thus, the invention also provides a fabricated potato snack product having a tubular body comprising a wall defining the perimeter of the tubular body, the perimeter wall having an inner surface and an outer surface, wherein both the inner surface and the outer surface have a plurality of ridges whereby the perimeter wall is corrugated, the snack product having a bulk density of at least 100g per litre, the snack product having a moisture content of not more than 3% by weight.

The snack product may be cooked by any suitable method, for example by frying or baking. The invention is of particular advantage in fried snack products, in which the reduction in blistering and blowing may be particularly relevant, and thus it is preferred that the snack product is a fabricated snack product which has been cooked at least in part by a frying step. The invention allows the efficient manufacture of snack products from doughs, especially but not exclusively from doughs with relatively high water content (for example 30 to 50% water) without a need for any interim drying step. That allows for different texture and taste characteristics as compared with snack products made from pellets. A further advantage of the invention is that the ridges enhance an attractive "crack-crunch" texture in the snack products.

The invention is of particularly advantageous application in the field of potato-based fabricated snacks. It has been found that, in the case of snack doughs containing potato material, it is possible to obtain more consistent product and to reduce wastage as a result of the reduced amount of blistering/blowing which occurs, especially in the case of fried snack products. Potato-based snack products to which the invention is applicable include those in which principal ingredients are derived from potato and those comprising potato-derived ingredients in combination with one or more non-potato material such as, for example, maize flour, rice flour, durum wheat flour, soft wheat flour etc. Preferably the potato-based doughs include potato-originating materials in amounts of at least 20% by weight, more preferably at least 30% by weight, based on the total weight of the dough ingredients excluding added water. The invention may also be applied to fried snack products based on other starch-containing doughs, for example, corn masa doughs, durum wheat doughs and soft wheat flour doughs. Potato-originating materials that may be used in the snack product of the invention include, without limitation, potato starch and potato dehydrates, for example, potato granules, potato flakes (for example low-leach potato flakes), potato flour or potato powder. It is preferred that the snack product contain at least 30% by weight potato dehydrates, based on the total solids content of the product.

The term "tubular body" is used in this specification to mean a hollow body which has a continuous perimeter wall enclosing a void region that is open at each end of the tubular body. For the avoidance of doubt, whereas the hollow body may be of generally circular cross-section, other cross-sectional configurations are also possible, for example, oval, rectangular or square cross-sections. Further, where in a preferred product of the invention the tubular body is curved, the cross-section may be non-uniform along the length of the product. In general, the tubular body will have a length that is greater than its maximum diameter, preferably at least 1.5, and preferably at least 2, times the maximum diameter. Except where the opposite is clearly intended, in the context of this specification the tubular body will be referred to as if it were a straight, circular or oval cylindrical, tubular body, even where as in a preferred embodiment the tubular body is not straight and/or is not cylindrical, and the terms "length" and "longitudinal" are to be understood accordingly.

The bulk density of the snack products of the invention is at least 100g per litre. Advantageously, the bulk density of the snack products of the invention is at least 120g per litre, preferably at least 135g per litre, and more preferably at least 150 g per litre. Bulk density values mentioned herein are measured by determining the weight per unit volume of multiple uncompressed snack products. In an illustrative method used in the Example herein, a previously weighed large ca. 5 litre container is filled to the brim with the snack products and reweighed, the mass of the snack product being determined as the difference between the filled and unfilled weights. The volume of the container is measured by filling the empty container to the same level with water and determining the volume of water required. The bulk density in g per litre is calculated as the mass of snack product in grams divided by the determined container volume in litres.

The bulk density of the snack products of the invention is typically substantially greater than, for example, that of snacks made from partially dried snack pellets. The greater density is indicative of different textural characteristics as compared with such prior snacks obtained from pellets.

Advantageously, the ridges extend substantially along the length of the tubular-shaped snack product. It is especially preferred that the outer surface has a multiplicity of evenly spaced ridges separated by troughs, and the inner surface has a multiplicity of evenly spaced ridges separated by troughs, the ridges and troughs on the outer surface being so aligned with the ridges and troughs on the inner surface that the perimeter wall has a corrugated configuration in cross-section without any offset. It will be appreciated that, in order for such alignment to be achievable, the pitch (ie spacing) of the ridges and troughs on the inner surface will need to be less than the pitch of the ridges and troughs on the inner surface. It is also within the scope of the invention for the pitch of the ridges and troughs to vary, provided that the variation on each side is such that there is general alignment between the ridges on the outer surface and the ridges on the inner surface, with a relatively small offset being optionally present as mentioned previously.

Advantageously, the direction in which the ridges extend on the surface of the perimeter wall is angled relative to the longitudinal direction. In that way the ridges are made to appear to have a twist around the tubular body in the direction generally from one end to the other. In the case of a tubular body that is of substantially circular or oval cylindrical configuration, the angling is preferably such that the ridge undergoes a degree of rotation (twist) of up to 40° per cm of the length of the tubular body. Advantageously, the ridges are angled such that they undergo a rotation of 2 to 40° per cm, preferably 2 to 30°, more preferably 2 to 20° per cm, especially 5 to 15° per cm of the length of the tubular body. Whilst it is possible within the ambit of the invention for the ridges to extend parallel to the longitudinal direction (corresponding to a degree of angling of 0° per cm of the length of the tubular body), it is preferred that the ridges are angled by at least 2° per cm length of the tubular body. For example, where the tubular body is circular cylindrical it will be appreciated that angled ridges and troughs will extend substantially helically around the tubular body. By way of illustration, where the tubular body has a length of 4 cm and the ridges are angled by (or have a "degree of twist" or "degree of rotation" of) 10° per cm length of the tubular body relative to the longitudinal direction, the ridges so extend between opposed ends of the tubular body that the circumferential position of the ridge at one end of the tubular body is circumferentially displaced by about 40° with reference to the circumferential position of the ridge at the other end of the tubular body.

In the case of a tubular body having a straight-sided perimeter wall, for example a tubular body which is substantially square or rectangular in cross-section, references herein to ridges or troughs that are "angled" means that the ridges or troughs extend at an angle relative to the longitudinal direction. In general, snack products in which the tubular body is of substantially circular or oval cylindrical configuration are preferred.

Advantageously, the length of the snack product is from 10mm to 80mm, preferably from 12mm to 70mm, especially from 20mm to 70mm, for example from 30mm to 60mm. The tubular body may be of straight tubular configuration. In certain embodiments, however, the tubular body is of curved tubular configuration, having a curve along the longitudinal direction. Advantageously, the tubular body has a minimum internal diameter of at least 5mm, preferably at least7mm, more preferably at least 8mm. A minimum diameter of at least 7mm has been found to be preferred in order to permit good circulation of frying medium to promote even cooking. Advantageously, the internal diameter of the tubular body is not more than 20mm, preferably not more than 15mm.

Advantageously, the snack product has a moisture content of not more than 2% by weight based on the total weight of the product.

When fried, the snack product advantageously has a fat content of from 10 to 40% by weight, for example from 15 to 35% by weight, especially from 20 to 35% by weight. In embodiments in which the snack product is cooked by methods other than frying, for example by baking, the fat content may be lower, for example from 0 to 20% by weight. References herein to "fat content" are to be understood as referring to the total fat content, including fat which is inherently present in other "non-fat" ingredients such as flour, although it will be appreciated that the amount of such inherent fat content will generally be small, for example, less than 1% by weight of the final product. Fat content is given as % by weight, based on the total product weight. Advantageously, where the snack product is fried it is cooked by frying in oil for example in high-oleic oil, especially sunflower oil, preferably high-oleic sunflower oil.

The invention also provides a process for making a fabricated snack product, comprising making a snack dough, advantageously a snack dough comprising one or more potato dehydrates, having a moisture content of from 30% - 60% by weight; extruding a tubular dough piece having a perimeter wall with parallel ridges and troughs on its outer and inner surfaces whereby the perimeter wall is of corrugated configuration; and cooking the tubular dough piece with moisture content between 30% - 60% by weight to form a snack product having a moisture content of not more than 3% by weight, for example not more than 2% by weight. Advantageously, the moisture content of the dough is from 35 to 50 % by weight.

References herein to "moisture content" are to be understood as referring to the total moisture content, including moisture which is inherently present in "dry" ingredients such as flour, although it will be appreciated that the amount of such inherent moisture content will generally be small, for example, not more than 12% by weight of the total weight of dry ingredients as used in the dough.

Preferably the dough comprises one or more potato dehydrates. Where present, potato dehydrates are preferably present in an amount of at least 20%, for example at least 30%, preferably at least 40%, especially at least 50%, by weight based on the dough ingredients excluding water.

Advantageously, the extruding step comprises extruding the dough through an extrusion die with an appropriately shaped die slot for forming the perimeter wall. In the preferred case of a snack product with a generally circular cylindrical tubular body, the extrusion die may have a substantially annular slot defined by an inner corrugated wall and an outer corrugated wall. Advantageously, the inner corrugated wall and the outer corrugated wall are aligned, whereby the substantially annular slot defined between them is itself of corrugated configuration in cross-section. Advantageously, the inner corrugated wall and the outer corrugated wall are stationary during extrusion.

Optionally, the products are subjected to a step of flavouring the snack product after cooking, before they are bagged.

Advantageously the process further comprises so extruding the dough piece that during extrusion the flow rate of the dough in one peripheral region of the tubular dough piece is higher than in at least one other peripheral region of the dough piece, thereby effecting curvature of the tubular dough piece along the direction of extrusion.

Preferably the snack product obtained in the process of the invention has a bulk density of at least 100 g per litre, for example, at least 120 g per litre, more preferably 135 g per litre, especially 150g per litre.

The invention also provides an apparatus for making a curved, snack product having a tubular body comprising a wall defining the perimeter of the tubular body, the perimeter wall having an inner surface and an outer surface, wherein both the inner surface and the outer surface have a plurality of ridges and troughs whereby said perimeter wall is corrugated, the apparatus comprising means for forming a dough; an extrusion device comprising a die having a die slot for extruding a tubular-shaped piece having inner and outer ridges from the dough, restriction means for preferentially limiting access of material to be extruded to a proportion of the die slot for inducing a deflection of the tubular piece on exiting from the die, and means for cooking the tubular-shaped dough pieces to obtain a snack product.

Advantageously, the die comprises an inner member having a corrugated wall surface extending around a longitudinal axis of the die for defining an inner perimeter wall of an extrusion slot, and an outer member arranged substantially concentrically with the inner member and having a corrugated wall arranged to extend around, and displaced radially outwardly from, the corrugated wall of the inner member. The corrugations on the inner member and the outer member are preferably in alignment, thereby defining between said inner member and said outer member a substantially annular slot which is itself of corrugated configuration. The annular slot has a length, taken in the longitudinal direction (i.e. the general direction of travel of the dough), of at least 2mm, preferably at least 4mm. Preferably, the corrugations on the inner and outer corrugated walls are angled relative to the direction of extrusion, whereby the outer and inner surfaces of the extrudate are formed with ridges which extend in an angled direction relative to the direction of extrusion.

Advantageously, the apparatus comprises restriction means for restricting the amount of dough fed to a part of the extrusion die in such a manner that the tubular-shaped dough piece is curled when leaving the die. The greater flow rate of the dough in a first part of the die aperture compared with the lower flow rate in an opposing second part of the die aperture results in expulsion of the dough at a faster rate in the first part than in the second part, with the result that the emerging tubular structure tends to be diverted towards the second part. In that way, the emerging piece is formed with a curled configuration. Preferably the curvature so formed is such that the angle subtended by a one cm length of the product outer envelope is from 10° to 35°, for example 20° to 30°. In practice, at least 50%, preferably at least 65%, more preferably at least 70%, and especially preferably at least 75% of the products made using the method and apparatus of the invention have a degree of curvature such that the angle subtended by a one cm length of the product outer envelope is from 10° to 35°, for example 20° to 30°. In a preferred embodiment of the apparatus of the invention, the extrusion die has an internal cross-section divided into two or more regions wherein in one of said regions the flow of material is blocked off by from 10 to 100%. As a result the flow of material to the extrusion die through that region of the cross-section is reduced with the result that the flow of material through an associated part of the extrusion slot is reduced as compared with the flow of material at other locations around the extrusion slot.

The invention also provides a bagged snack, the bagged snack comprising a multiplicity of snack pieces according to the invention. For example, the bags may contain from 20 to 60 g snack product, for example 20 to 40g snack product or 30 to 60g snack product. Preferably, at least 50%, preferably at least 65%, more preferably at least 70%, and especially preferably at least 80% of the products in a said bagged snack of the invention have a degree of curvature such that the angle subtended by a one cm length of the product outer envelope is from 10° to 35°, for example 20° to 30°.

Certain embodiments of the invention will be described below by way of illustrative Examples, and with reference to the accompanying drawings in which:
Fig. 1 is a perspective view of a snack product according to one embodiment of the invention;
Fig. 2 is a plan view of the snack product of Fig. 1 showing certain parameters;
Fig. 3 is a plan view of an extrusion die slot for forming a snack product according to the invention;
Fig. 3a is an expanded schematic view of the die slot;
Fig. 4 is a side view, partly in section, of an extrusion die shown in exploded configuration;
Fig. 5 is a horizontal section through an upper component of the extrusion die;
Fig. 6 is a flow diagram showing one form of process according to the invention.

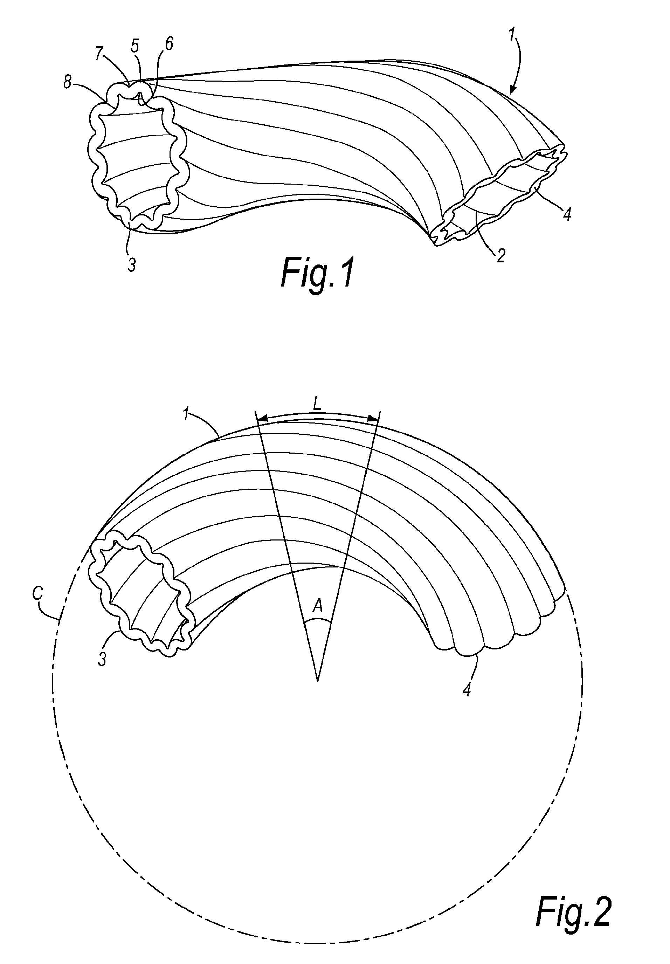

With reference to Fig. 1, a snack product according to a first embodiment of this invention comprises an essentially tubular body having a circumferential wall generally indicated by reference numeral 1 defining an internal void region 2. The ends of the tubular body are open, with end openings being defined by wall end surfaces 3 and 4. The tubular body is curved. Except, however, where the opposite is clearly intended, in the context of this specification the tubular body will be referred to as if it were a straight cylindrical tubular body. Thus, for example, "longitudinal axis" will be used to refer to a notional line between the two end openings, even though in the snack product under consideration, for example as shown in the embodiment of Fig. 1, a line extending along the centre of the tubular body between the open ends will be curved rather than straight. The circumferentially extending wall 1 comprises a cooked potato-based snack material and comprises a series of substantially parallel ridges 5, 6 and troughs 7, 8. If desired the ridges and troughs may be more angular or less angular in configuration than in the embodiment shown in Fig. 1.

Referring first to the outer surface of the tubular body, the peaks of the ridges 5 and the bottoms of the troughs 7 each extend without interruption from a first end 3 of the tubular body to the second end 4. The peaks and trough bottoms extend in a direction that is slightly inclined relative to the longitudinal axis of the tubular body, whereby the end of a peak of a ridge 5 at end 3 is angularly displaced with respect to the end of the peak of the same ridge 5 at end 4. In the embodiment of Fig. 1, the snack product has a length of 4cm and the ridges are angled relative to the longitudinal direction by about 15° per cm, so that the angular displacement of the ridge along the length of the product is of the order of 60°, although it is contemplated within the invention for the angular displacement to be lower or higher. Embodiments in which there is no angular displacement of the peaks and troughs, that is, the ridges and troughs extend parallel to the longitudinal axis of the tubular body, are also possible although less preferred.

In the embodiment of Fig. 1, the tubular body has an overall longitudinal length of approximately 40mm, and an external diameter of approximately 14mm. The average wall thickness, as measured between a ridge peak on the interior surface and a ridge peak on the exterior surface is about 2mm, with the average thickness as measured between a trough bottom on the interior surface and a ridge peak on the exterior surface being about 3mm. The parallel ridges and troughs are evenly distributed around the tubular body, with a total number of twelve ridges and twelve troughs on each surface. In order for there to be alignment between the ridges 5 on the exterior surface and the ridges 6 on the interior surface it will be appreciated that the pitch between peaks on the interior surface will be less than the pitch between peaks on the exterior surface. Ridges 5 and troughs 7 on the exterior surface are aligned with ridges 6 and troughs 8, respectively, of the interior surface whereby the tubular wall is of corrugated configuration. That is particularly advantageous in allowing frying of the product with reduced blistering or blowing, even when potato dehydrates are used, and in allowing moisture loss on frying in an even fashion. The ridges also enhance an attractive "crack crunch" texture of the product.

Fig. 2 is a plan view of the product of Fig. 1. As already mentioned with reference to Fig. 1, the tubular body is curved. The degree of curvature can be defined as illustrated in Fig. 2 by placing the tubular body on a flat surface, drawing a notional circle C defined as the circle most closely coinciding with the outer envelope surface of the snack product, and determining the angle A subtended by a 10mm length L of the circumference of that circle. The outer envelope surface of the snack product is used herein to refer to a notional product envelope defined by the outermost points on the outer surface, disregarding any trough regions. The outer envelope surface will generally correspond to the highest radius of curvature of the tube. It is preferred for the angle A to be from 10° to 35°, for example 10° to 30°, especially from 15° to 30°. In a typical batch of product according to the invention, for example a bagged snack according to the invention, at least 50% of the individual pieces have an angle A in the range of from 10° to 30°.

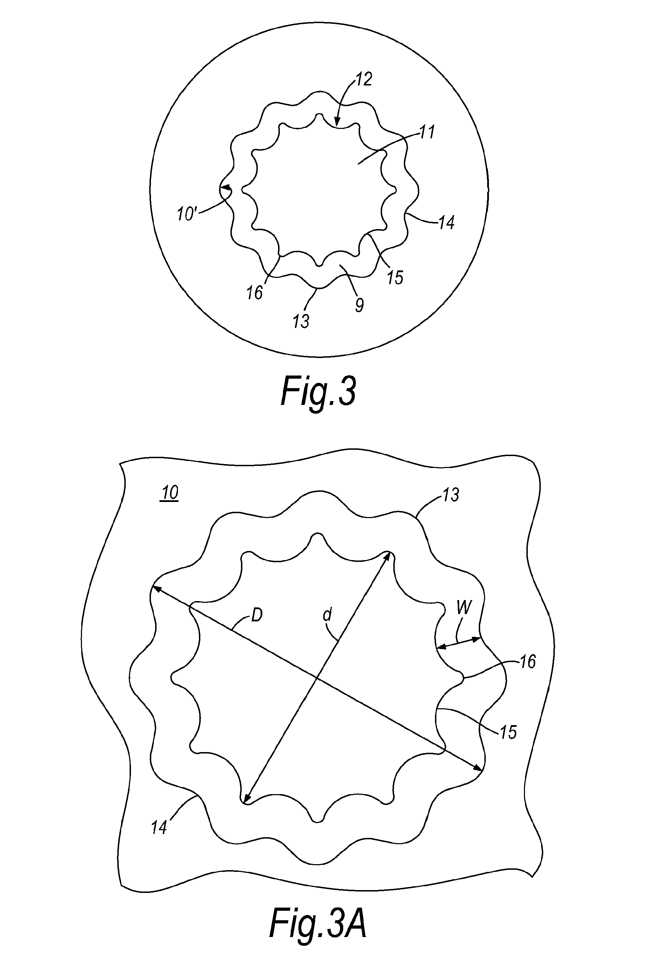

One form of extrusion die suitable for making the snack product of Figs. 1 and 2 is shown in Figs. 3, 3a, 4 and 5. With reference to Fig. 3, a plan view of the die outlet face of a die for producing an extruded dough piece is shown. The die has an essentially annular slot with a slot outlet 9. The slot outlet 9 is defined by an outer member 10 having a surface 10' defining the outer perimeter of the slot and an inner member 11 having a surface 12 defining the inner perimeter of the slot. The outer member is arranged substantially concentrically with the inner member 11. The die is provided on the die surface 10' defining the outer perimeter of the annular slot by a corrugated surface having a series of twelve peaks 13 and troughs 14. Further, the die surface 12 defining the inner perimeter of the annular slot has a corrugated surface having a series of twelve troughs 15 and peaks 16. The peaks and troughs on each of surfaces 10' and 12 are evenly spaced such that each peak/trough (measured from the centre of one peak to the centre of the adjacent peak) subtends an angle of 30° at a position coinciding with the centre of both the surfaces 10' and 12. The peaks 13 of the outer perimeter surface 10' are aligned with the peaks 16 of the inner perimeter surface 12. Further, the troughs 14 of the outer perimeter surface 10' are aligned with the troughs 15 of the inner perimeter surface 12. In that manner, there is formed a corrugated configuration with the corrugated pattern extending circumferentially around the tubular body. By way of illustration, referring to Fig. 3a, the annular slot may have a maximum diameter D of 12.5mm and a minimum diameter d of 8.5mm. The slot width W indicates the width of the slot and may be for example 1.35 mm.

The surface 10' and the outer surface 12 of the inner member 11 define an essentially annular channel of length approximately 4mm, along which the corrugations are angled so as to have a circumferential twist around the general direction of extrusion of the dough. In that way, as the dough is extruded it is formed into a tubular structure with angled ridges and troughs on both the outside and inside surfaces. In practice it may be found that the extent of twist required in the die may need to be greater than the degree of twist of the ridges desired in the snack product since the extruded dough piece may not fully retain the degree of twist of the die after it has been extruded.

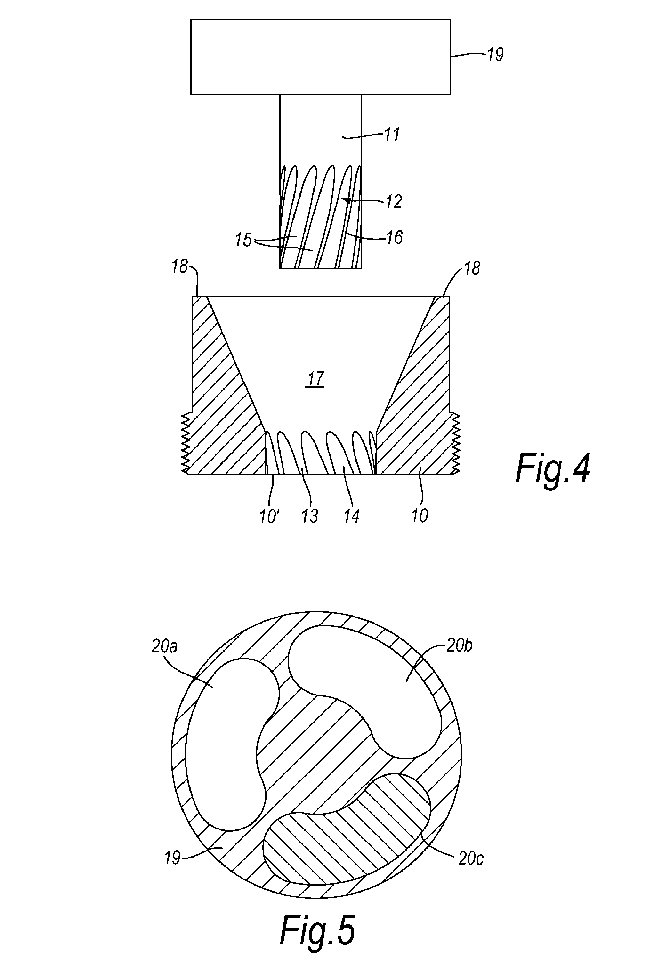

Fig. 4 is an exploded view of the extrusion die. Outer die member 10 has an upstream portion with a circumferential wall 17 defining a flow pathway whose circumference reduces in the direction of flow towards the orifice, and comprises a generally circular aperture defined by surface 10' which is provided with a series of ridges 13 and troughs 14 extending at an angle relative to the direction of flow. The inner die member 11 is in the form of a shaft which is integrally formed with or rigidly attached to a flow control plate 19. The flow control plate 19 is configured and dimensioned to abut an upper peripheral surface 18 of outer die member 10 such that a lower portion of the shaft 11 is located within, and concentric with, the surface 10'. The ridges 16 and troughs 15 on the shaft 11 are angled relative to the flow direction such that when the shaft 11 is correctly located within the outer die member 10 the ridges and troughs on the shaft 11 are in alignment with ridges and troughs, respectively, of the surface 10' of outer member 10. An annular pathway is thus formed through which the dough, in use, flows in a generally axial direction.

With reference to Fig. 5, the plate 19 is of generally circular configuration. It is provided with three kidney-shaped apertures 20a, 20b and 20c. In the embodiment shown, the aperture 20c has been plugged to prevent flow of dough therethrough. As a result, in use, dough is free to flow through two of the apertures, 20a and 20b, but not through the aperture 20c which is blocked. As a result of the obstruction preferentially of one portion of the pathway, the flow of dough is slowed in the region of the pathway downstream of the aperture 20c as compared with the region downstream of the apertures 20a and 20b which are unobstructed. This preferential reduction of the flow rate is reflected in a lower flow rate in one peripheral portion of the die orifice relative to the rest. The faster flow of dough in the remainder of the orifice tends to push the emerging body of dough in a direction towards the region of lower flow rate, thus causing the emerging annular body to be deflected away from the axial direction.

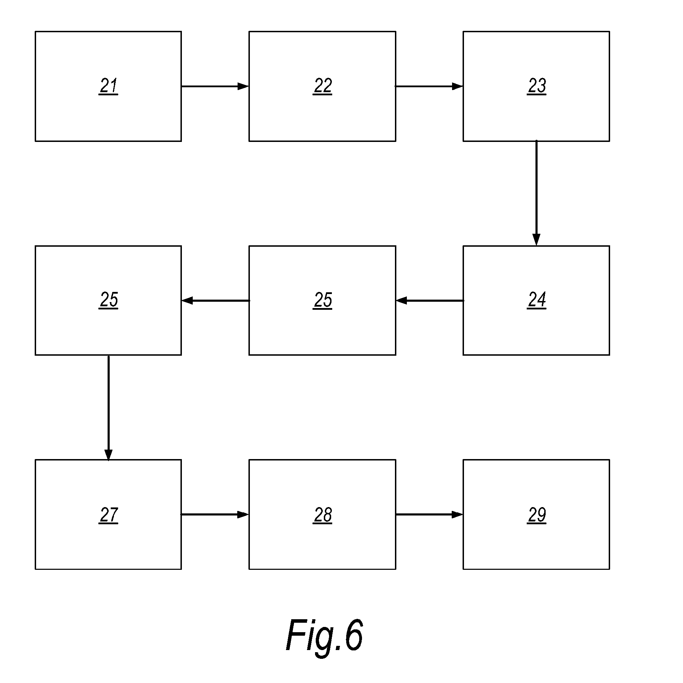

Referring to Fig. 6, in a process for making a snack product according to the invention a dry mix is prepared, 21, including the principal dry ingredients. Water is added, 22, and the ingredients are mixed, 23, to form a dough. The dough is transferred into an extrusion device, 24, and extruded through a die, 25, to form a tubular extrudate having ridges on both the inside and outside surfaces of the tube. The extrudate is cut, 26, into pieces of the desired length. The pieces are fried in a fryer, 27. After frying the fried pieces are optionally flavoured in a flavouring step 28 before being transferred to a bagging apparatus 29 at which the product is bagged to obtain bagged snacks, each bag containing a multiplicity of the individual pieces.

### Example

In this specification unless the contrary is indicated "parts" means parts by weight and % by weight means % by weight based on the total weight.

| Ingredient | % by weight |
|---|---|
| Dehydrated potato | 32 |
| Potato starch | 30 |
| Salt | 1 |
| Water | 37 |

The solid ingredients listed in the table above were premixed to form a dry mixture for two minutes. The water was added over about 30 seconds whilst continuing mixing, and mixing was continued for 90 seconds to form a dough. The dough was supplied to a batch hydraulic piston extrusion system having an extrusion die comprising an annular slot configured to produce a tubular body of dough having a corrugated tubular wall with ridges and troughs extending at a slight angle to the longitudinal direction on the inside and the outside of the tubular wall, for example a die having an annular slot of the configuration described with reference to Fig. 3a. The interior of the die is so configured and dimensioned that dough is fed at a greater flow rate to a two thirds portion of the annular slot than in the remaining one third portion, as illustrated with reference to Fig. 5. In that manner, there is induced a curve in the generated extrudate as is evident in the fried product of Fig. 1. Hydraulic pressure to the extrusion system is adjusted to be sufficient to maintain a constant rate of extrusion. The emerging extrudate is cut into pieces of approximately 40mm in length and the pieces are introduced, without any intervening drying step, into a fryer containing hot oil at a temperature of from 175 to 180°C. The pieces are fried for about 90 seconds, with the final moisture content being from 1 to 2 weight %. The bulk density of the final product was approximately 195g per litre. The pieces had a degree of curvature such that the angle A (as illustrated in Fig. 2) of at least 50% of the pieces was in the range of from 15° to 30°.

The fried pieces were found to have excellent texture and appearance, with substantially no blistering or blowing, in spite of the absence of any interim drying step before frying. They were found to have an attractive "crack crunch" texture.

Further, it was found that the appearance and texture was better, as compared with tubes having protrusions on only an outer surface, which were found to have a somewhat dense and heavy texture. It is believed that the advantageous appearance and texture is due to less occurrence of blistering and blowing and/or to greater evenness of frying as a result of the more uniform thickness of the products of the invention.

## Claims

1. A fabricated snack product having a tubular body comprising a perimeter wall defining the perimeter of the tubular body, the perimeter wall having an inner surface and an outer surface, wherein both the inner surface and the outer surface have a plurality of ridges and troughs, preferably parallel ridges and troughs, whereby the perimeter wall is of corrugated configuration, and wherein the snack product has a bulk density of at least 100g per litre, the snack product having a moisture content of not more than 3% by weight.

2. A fabricated snack product according to claim, wherein the snack product is a fried snack product.

3. A fabricated fried snack product according to claim 1, wherein the snack product comprises potato material and/or cereal material.

4. A fabricated snack product according to any one of the preceding claims, wherein the snack product is a potato snack product, preferably comprising potato material in an amount of at least 30% by weight based on the weight of the snack product excluding oil and moisture.

5. A fabricated snack product according to any of the preceding claims, obtainable from a dough comprising one or more ingredients selected from the group consisting of: potato starch, potato granules, potato flakes, and potato powder.

6. A fabricated snack product according to any of the preceding claims, wherein the ridges and troughs extend on the surface of the perimeter wall in a direction that is angled relative to the longitudinal axis of the tubular body, preferably at an angle of from 2 to 50° relative to the longitudinal axis.

7. A fabricated snack product according to claim 7, wherein the perimeter wall is curved and the ridges and troughs extend circumferentially around said tubular body with an angle of rotation of from 2 to 40° per cm length of the product.

8. A fabricated snack product according to any of the preceding claims, wherein the thickness of the wall is substantially uniform.

9. A fabricated snack product according to any of the preceding claims, wherein the length of the snack product is from 10mm to 80mm, preferably from 12mm to 60mm.

10. A fabricated snack product according to any of the preceding claims, wherein the tubular body has a minimum internal diameter of at least 5mm.

11. A fabricated snack product according to any of claims 1 to 14, wherein the tubular body is of longitudinally curved tubular configuration, preferably having a curvature such that the angle subtended by a one cm length of the product outer envelope is from 10° to 35°.

12. A process for making a fabricated snack product according to any one of claims 1 to 11, comprising making a snack dough having a moisture content of from 30% to 60%; extruding a tubular dough piece having a perimeter wall with parallel ridges and troughs on its outer and inner surfaces whereby the perimeter wall is of corrugated configuration; and cooking the tubular dough piece with moisture content between 30% to 60% by weight to form a snack product having a moisture content of not more than 3% by weight.

13. A process according to claim 12, wherein the cooking step comprises frying the dough piece in oil.

14. A process according to claim 12 or claim 13, which further comprises so extruding the dough piece that during extrusion the flow rate of the dough in one peripheral region of the tubular dough piece is higher than in at least one other peripheral region of the dough piece, thereby effecting curvature of the tubular dough piece along the direction of extrusion.

15. An apparatus for making a curved, snack product having a tubular body comprising a wall defining the perimeter of the tubular body, the perimeter wall having an inner surface and an outer surface, wherein both the inner and the outer surface have a plurality of ridges and troughs whereby said perimeter wall is of corrugated configuration, the apparatus comprising means for forming a dough; an extrusion system comprising a die for extruding a tubular-shaped piece having inner and outer ridges from the dough, restriction means for preferentially limiting access of material to be extruded to a proportion of the die for inducing a deflection of the tubular piece on exiting from the die, and means for cooking the tubular-shaped dough pieces to obtain a snack product.

16. An apparatus according to claim 15, wherein the apparatus comprises restriction means for partially restricting the amount of dough fed to a part of the extrusion die in such a manner that the tubular-shaped dough piece is curled when leaving the die.
